# EUROPEAN PATENT APPLICATION

(11) **EP 4 365 153 A1**
(43) Date of publication of application: **08.05.2024**
(21) Application number: 23150329.3
(22) Date of filing: 04.01.2023
(51) Int. Cl.: C04B 37/00, C04B 37/02, C08K 3/04, C08K 3/14, C08K 3/34, C09J 163/00

(54) **DIAMOND-CONTAINING ADHESIVE FOR JOINING REACTION-BONDED SILICON-CARBIDE PARTS**

(30) Priority: 01.11.2022 US 202218051756
(71) Applicant: II-VI Delaware, Inc., Wilmington, DE 19890 (US)
(72) Inventor: Salamone, Sam, Wilmington, 19801 (US); McAnany, Sean, Wilmington, 19801 (US); Evans, Glenn, Wilmington, 19801 (US)
(74) Representative: Tegethoff, Sebastian

(57) **Abstract**

An epoxy-based glue includes an epoxy material, and a solids component including diamond powder and silicon-carbide particles. The adhesive material may be used to form reaction-bonded silicon-carbide bonding reaction-bonded silicon-carbide parts together. The present disclosure also relates to a method of assembling a product from preforms (42, 44), including locating an adhesive layer (46), containing diamond powder (54) and silicon carbide particles (56), between opposed preform surfaces, carbonizing the layer, and infiltrating molten silicon into the preforms and the carbonized layer to convert the preforms into corresponding reaction-bonded silicon-carbide parts, and to convert the carbonized layer into a reaction-bonded silicon-carbide bonding region with a reduced amount of residual silicon. An assembled product, including at least two reaction-bonded silicon-carbide parts bonded together by processing a diamond-containing adhesive, is also disclosed.

## Description

### Field of the Invention

The present disclosure relates to an epoxy-based glue, a method of assembling a product from at least two preforms, and a method of making an assembled product in which reaction-bonded silicon-carbide parts are bonded together by a reaction-bonded silicon-carbide joint region.

### Brief description of the related art

Reaction-bonded silicon-carbide (RB-SiC, or Si/SiC) is a multi-phase material formed by reactive infiltration in which molten elemental silicon (Si) is brought into contact with a porous mass of silicon-carbide (SiC) particles plus carbon (C) in a vacuum or inert atmosphere. A wetting condition is created such that the molten silicon is pulled by capillary action into the mass of silicon-carbide particles and carbon, and the silicon reacts with the carbon in the mass to form additional silicon carbide. The resulting reaction-bonded silicon-carbide material contains primarily silicon carbide, but also unreacted, interconnected silicon.

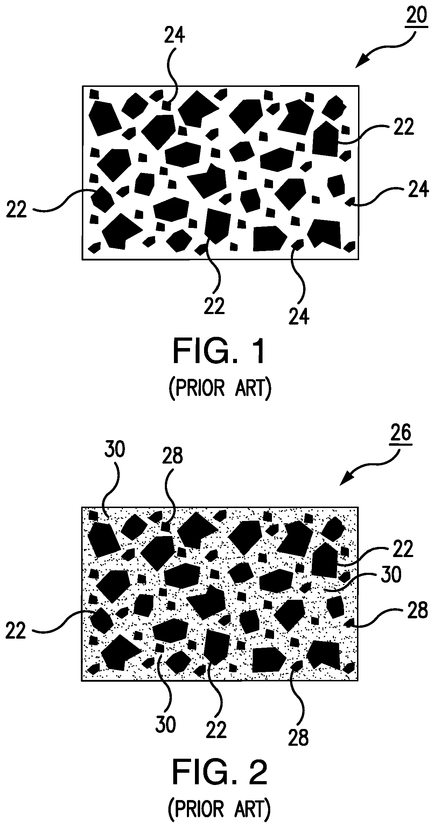

The infiltration process is illustrated in FIGS. 1 and 2. FIG. 1 is a schematic cross-sectional view of the porous mass (or preform) 20 which contains silicon-carbide particles 22 and carbon 24. FIG. 2 is a schematic cross-sectional view of the reaction-bonded silicon-carbide material (a ceramic material) 26 after infiltration by molten silicon, and subsequent cooling. The infiltration may occur in a vacuum or inert atmosphere.

In the illustrated process, the molten silicon reactively infiltrates into the preform 20 (FIG. 1) such that the reaction-bonded silicon-carbide material 26 (FIG. 2) has a microstructure of three elements: (1) the original silicon-carbide particles 22; (2) reaction-formed silicon carbide (Si + C => SiC) 28, and (3) residual (unreacted) elemental silicon 30. The silicon 30 expands as it solidifies from its liquid state (as does water (H₂O) and gallium (Ga)). As a result, the reacted, solidified three-component microstructure 22, 28, 30 is fully dense.

As the term is used herein, reaction-bonded silicon-carbide material is a fully dense, two-phase composite of silicon-carbide particles in a continuous silicon matrix. Reaction-bonded silicon-carbide material is mentioned in United States Patent Application Publications Nos. 2022/0227676 (published July 21, 2022), 2021/0331985 (published October 28, 2021), 2018/0099379 (published April 12, 2018), 2017/0291279 (published October 12, 2017), and 2014/0109756 (published April 24, 2014). The entire disclosures of United States Patent Application Publications Nos. 2022/0227676, 2021/0331985, 2018/0099379, 2017/0291279, and 2014/0109756 are incorporated herein, in their entireties, by reference.

### Summary of the Invention

The present disclosure relates to an epoxy-based glue which includes: a liquid component including an epoxy material; and a solids component including diamond powder and silicon-carbide particles. The glue may be used, if desired, to form a joint region formed of reaction-bonded silicon-carbide connecting at least two parts formed of reaction-bonded silicon-carbide.

The present disclosure also relates to a method of assembling a product from at least two preforms. The method includes: locating an adhesive layer between opposed surfaces of the preforms, the adhesive layer including an epoxy material and diamond powder; carbonizing the adhesive layer to produce a carbonized layer; and infiltrating molten silicon into the preforms and the carbonized layer to convert the preforms into corresponding parts including reaction-bonded silicon-carbide, and to convert the carbonized layer into a joint region bonding the parts together and including reaction-bonded silicon-carbide.

The present disclosure also relates to a method of making an assembled product in which reaction-bonded silicon-carbide parts are bonded together by a reaction-bonded silicon-carbide joint region. The joint region is formed from a diamond-containing epoxy-based adhesive so as to have a reduced amount of residual silicon.

The foregoing summary is not intended to summarize each potential embodiment or every aspect of the present disclosure.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 is a schematic cross-sectional view of an example of a preform material for production of a reaction-bonded silicon-carbide ceramic substrate in accordance with the present disclosure.
FIG. 2 is a schematic cross-sectional view of a reaction-bonded silicon-carbide material made from the preform material of FIG. 1.
FIG. 3 is a side view of an example of a preform assembly constructed in accordance with the present disclosure, where liquid adhesive is located between two preforms;
FIG. 4 is a photomicrograph of a cross section of an example of a product assembled from the preform assembly illustrated in FIG. 3, where a joint region is located between two parts, and the joint region and the two parts contain reaction-bonded silicon-carbide.
FIG. 5 is a flowchart for an example of a method of making the assembled product illustrated in FIG. 4.
FIG. 6 is a photomicrograph of a cross section of another product assembled in accordance with the present disclosure.
FIG. 7 is a photomicrograph of a cross section of yet another product assembled in accordance with the present disclosure.

Throughout the drawings, like elements are designated by like reference numerals and other characters. The drawings show non-limiting examples for purposes of illustration and explanation of the present disclosure, and are not drawn to scale.

### Detailed Description of the Invention and the Figures

The technical problem is solved by the independent claims. The dependent claims cover further specific embodiments of the invention.

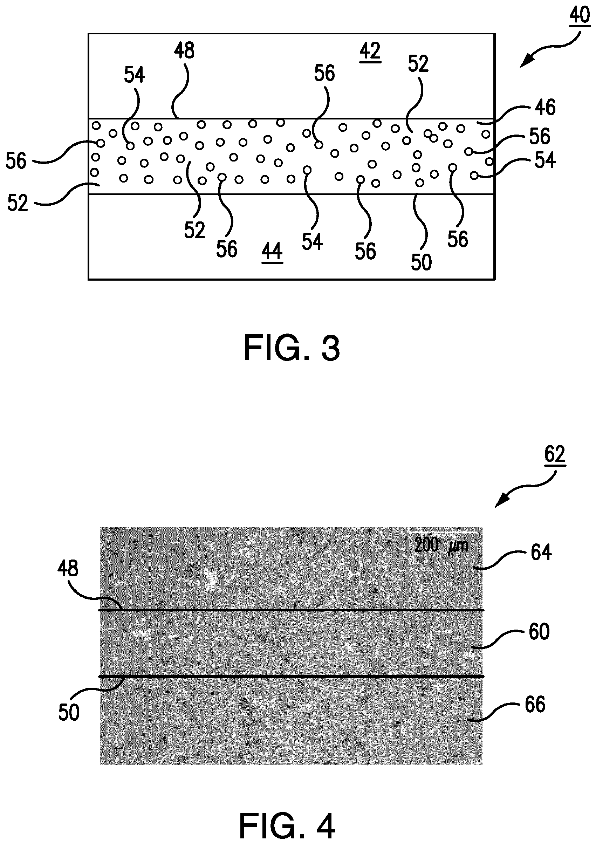

The Referring now to FIG. 3, the illustrated preform assembly 40 includes first and second preforms 42, 44, and an adhesive layer 46 located between the preforms 42, 44. Each one of the preforms 42, 44 includes a porous mass of silicon-carbide particles and carbon of the type illustrated in FIG. 1. The adhesive layer 46 is a flowable liquid adhesive (which may be referred to herein as glue) and contacts facing sides 48, 50 of the preforms 42, 44. In the illustrated example, the thickness of the adhesive layer 46 is approximately equal to the distance between the facing sides 48, 52 and may be about 200 µm. The present disclosure should not be limited, however, to numerical ranges and values mentioned herein unless such features are mentioned in the accompanying claims. In the illustrated configuration, the first preform 42 is glued to the second preform 44 by the adhesive layer 46.

As described in more detail below, the adhesive layer 46 has a liquid component 52 and a solids component 54, 56. The liquid component 52 may include a suitable epoxy resin and a suitable epoxy hardener. The solids component 54, 56 may include diamond particles 54 and other powder 56. If desired, the diamond particles 54 may be fine-grain diamond powder (with a grain size in a range of from about 1 µm to about 5 µm, and preferably about 3 µm). The other powder 56 may be mainly silicon-carbide particles as discussed in more detail below. During infiltration processing, as described in more detail below, the diamond particles 54 fully react with molten silicon to create a reaction-bonded joint region 60 (FIG. 4) with only a small amount of residual (elemental) silicon.

In connection with another aspect of the present disclosure, the adhesive layer may, if desired, contain larger diamond particles (with a grain size, for example, greater than about 10 µm) in addition to the fine-grain diamond particles 54. According to this aspect of the present disclosure, the larger diamond particles do not fully react with molten silicon and may exist as diamond particles in the final joint compound.

The preform assembly 40 (FIG. 3) may be used, if desired, to produce the product 62 shown by way of example in FIG. 4. The illustrated product 62 includes first and second parts 64, 66 joined together by the joint region 60. The first and second parts 64, 66 are produced by infiltrating the respective preforms 42, 44 (FIG. 3) with molten silicon in a vacuum or inert atmosphere. Each one of the first and second parts 64, 66 includes the microstructure of three elements illustrated in FIG. 2: (1) the original silicon-carbide particles that were in the preforms 42, 44; (2) reaction-formed silicon carbide (Si + C => SiC), and (3) residual (unreacted) elemental silicon.

The joint region 60 may be produced by a carbonization process which converts hardened epoxy material (formed by polymerization of the epoxy resin of the adhesive layer 46) at least partially into carbon, followed by an infiltration process in which molten silicon infiltrates the carbonized residue in a vacuum or inert atmosphere. After the infiltration process, the joint region 60 includes a microstructure of four elements: (1) the silicon-carbide particles 56 that were in the liquid adhesive 46; (2) reaction-formed silicon-carbide produced from reactions between (a) carbon particles formed during the carbonization process and (b) the infiltrating silicon; (3) reaction-formed silicon-carbide produced from reactions between (a) the diamond particles 54 that were in the liquid adhesive 46 and (b) the infiltrating silicon; and a small amount of residual (elemental) silicon.

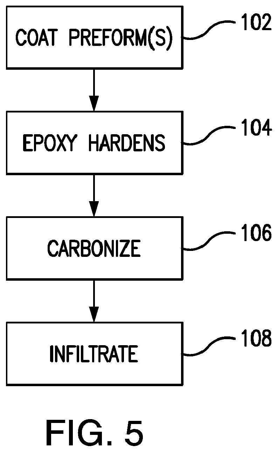

An example of a method of making the assembled product 62 is illustrated in FIG. 5. In a preliminary step 102, one or both of the sides 48, 50 of the preforms 42, 44 is/are coated with the liquid adhesive which forms the adhesive layer 46. The liquid adhesive is flowable during this preliminary step 102, with a sufficiently low viscosity to be coated on the sides 48, 50 of the preforms 42, 44. In a subsequent step 104, the preforms 42, 44 are pressed together until the epoxy resin in the adhesive layer 46 is polymerized and hardens.

In a subsequent step 106, the atmosphere around the adhesive layer 46 and at least portions of the preforms 42, 44 is displaced by nitrogen or another suitable inert gas, and the temperature of the hardened adhesive layer 46 is increased to a carbonization temperature in the range of from 560 °C to 840 °C. The carbonization temperature should be high enough and applied long enough to convert all, or at least a substantial amount, of the epoxy materials of the adhesive layer 46 into elemental carbon. If desired, the carbonization temperature may be about 700 °C. After the carbonization step 106, the material remaining between the preform surfaces 48, 50 includes the diamond particles 54, the other powder (mainly silicon-carbide particles) 56, and the carbon produced by the high-temperature carbonization, and essentially no epoxy material.

Then, in a subsequent step 108, the preforms 42, 44 and the material remaining between the surfaces 48, 50 of the preforms 42, 44 are simultaneously infiltrated with molten silicon in a vacuum or an inert gas. The silicon infiltration converts the porous masses of the preforms 42, 44 into reaction-bonded silicon-carbide, and thereby produces the parts 64, 66 from the preforms 42, 44. At the same time (that is, during step 108), the silicon infiltration converts the material remaining between the surfaces 48, 50 into the reaction-bonded joint region 60 which has, as noted above, a four-element microstructure: (1) the silicon-carbide particles 56 that were in the liquid adhesive 46; (2) reaction-formed silicon-carbide produced by reactions between (a) carbon particles formed during the carbonization process and (b) the infiltrating silicon; (3) reaction-formed silicon-carbide produced by reactions between (a) the diamond particles 54 and (b) the infiltrating silicon; and (4) a small amount of residual (unreacted) elemental silicon.

During the infiltration process (that is, during step 108), the infiltrating silicon may pass through the surfaces 48, 50 in either direction (that is, into or out of the preforms 42, 44). The molten silicon passes into the carbonized region from the edges of the carbonized region, or through the surfaces 48, 50, using wetting/capillary action as the motive force. At the end of the infiltration process, the reaction-bonded silicon-carbide parts 64, 66 are bonded to each other by the reaction-bonded joint region 60.

The liquid component of the liquid adhesive which constitutes the adhesive layer 46 (FIG. 3) may be in the range of from 18% to 28% by weight of the liquid adhesive. The solids component of the liquid adhesive may be in the range of from 72% to 82% by weight of the liquid adhesive. According to a preferred aspect of the present disclosure, the weight of the liquid component divided by the weight of the solids component of the liquid adhesive may be about 0.30, that is, in a range of from 0.27 to 0.33. Again, however, the present disclosure should not be limited to the numerical ranges and values mentioned herein unless such features are mentioned in the accompanying claims.

As noted above, the liquid component of the liquid adhesive contains a suitable epoxy resin and a suitable epoxy hardener. The resin may be in the range of from 83% to 90% by weight of the liquid component. The hardener may be in the range of from 18% to 28% by weight of the liquid component. In operation, the liquid adhesive hardens during step 104 as a result of polymerization of the mixture of epoxy resin and epoxy hardener while the preforms 42, 44 are pressed together. Epoxy materials that may employed in connection with the present disclosure should provide sufficient adhesion of the assembled preforms 42, 44 to each other in advance of step 106.

As also noted above, the solids component of the liquid adhesive 46 includes diamond particles 54 and other powder 56. The diamond particles 54 may be in the range of from about 1% to about 10% by weight of the solids component. The other powder 56 may be in the range of from about 90% to about 99% by weight of the solids component. The other powder 56 may be selected to provide the liquid adhesive with suitable viscosity, bulk, and other desirable characteristics during the coating step 102. The other powder 56 may be mainly silicon-carbide particles of varying grit sizes in combination with small additions of other ceramic species.

The joint region 60 provides a strong bond between the reaction-bonded silicon-carbide parts 64, 66, especially for high temperature applications, because there is only a small amount of residual silicon in the joint region 60. The adhesive layer 46 contains small amounts of fine grain (3 µm) diamond powder 54. During the silicon infiltration process (step 108), the diamond powder 54 fully reacts with the molten silicon so that the joint region 60 has only a small amount of silicon. Including the diamond powder 54 in the liquid adhesive 46 helps to reduce the amount of unreacted (elemental) silicon that remains in the joint region 60 after the infiltration process. In general, the bonding strength of the joint region 60, especially for high temperature applications, is inversely proportional to the amount of unreacted (elemental) silicon in the solidified joint region 60 relative to the volume of the joint region 60.

In general, preforms with high carbon levels lead to reaction-bonded ceramics with little residual silicon since the silicon-carbide formation reaction (Si + C => SiC) is volumetrically expansive. Carbonized epoxy materials are a relatively low-density source of carbon, which by itself would disadvantageously lead to higher residual silicon content in the joint region after infiltration. Because the starting density of diamond is high, conversion of diamond particles to silicon carbide advantageously results in very large volume expansion, which leads to low silicon content in the finished product. In other words, incorporating the diamond powder 54 in the adhesive layer 46 helps to establish a reaction-bonded joint region 60 which is advantageous for high-temperature applications.

Densities of different carbon sources and the extent to which those sources lead to volumetric increases when reacted with infiltrating silicon are listed in Table 1. Of the different carbon sources, diamond has the greatest density and leads to the greatest increase in volume when reacted with silicon.

**Table 1**

| Form of Carbon | Density (g/cc) | Volume of 1 mole of Carbon (Atomic Weight/Density) (12/density) | Volume of 1 Mole of SiC Created by Reaction with Infiltrated Si (Atomic Weight/Density) (40/3.21) | Volume Increase (%) |
|---|---|---|---|---|
| Carbon Black | 1.70 | 7 | 12.5 | 78% |
| Graphite | 2.25 | 5.3 | 12.5 | 136% |
| Diamond | 3.52 | 3.4 | 12.5 | 268% |

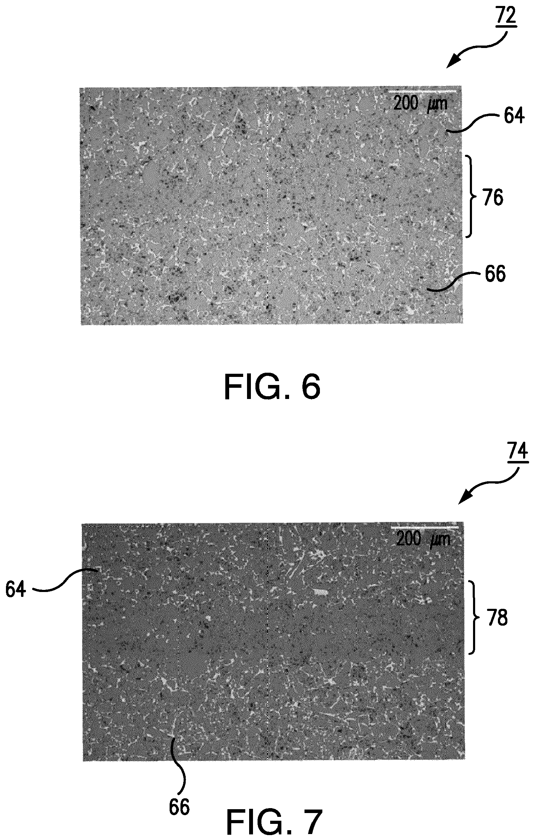

In the example illustrated in FIGS. 3 and 4, the solids portion of the liquid adhesive 46 contains about 5% diamond powder 54 by weight. In other products 72, 74 illustrated in FIGS. 6 and 7, the solids portion of the liquid adhesive used to make joint regions 76, 78 for the assembled products 72, 74 contains about 1% and 10% diamond powder 54 by weight, respectively. Compared to the joint region 60 illustrated in FIG. 4, the joint regions 76, 78 illustrated in FIGS. 6 and 7 contain more and less residual silicon, respectively. In the illustrated examples, the relative amount of residual silicon decreases with increased diamond-powder content.

The inverse relationship between the content of diamond powder 54 in the adhesive layer 46 and the amount of residual silicon in the joint region 60, 76, 78 is believed to be because, compared to other sources of carbon, diamond has a greater density and therefore leads to a greater reaction-formed increase in volume, and therefore crowds out more space that would otherwise contain unreacted silicon. In FIGS. 4, 6, and 7, lighter and darker regions represent unreacted silicon and silicon carbide, respectively. When the solids portion of the liquid adhesive used to make the assembled product contains 10% diamond powder by weight, the reaction-bonded joint region 78 (FIG. 7) contains very little unreacted silicon and is very desirable for high temperature applications.

After the desired joint region 60, 76, 78 is fully formed (hardened/cooled after infiltration), the finished product 62, 72, 74 may be further processed for use in various precision applications, including, but not limited to, semiconductor equipment and optical substrates and housings. Such further processing may include machining and surface finishing and assembly into one or more systems. The reaction-bonded materials within the joined parts and the joint region may advantageously exhibit low thermal expansion, high thermal conductivity, low density, and high stiffness. The assembled product 62, 72, 74 may be especially advantageous where it is more efficient or economical to join two or more smaller parts together into a desired shape, rather than to machine or otherwise produce a product with the desired shape from a larger block of material.

In summary, the present disclosure relates to a composition of matter in which an epoxy-based flowable glue 46 contains silicon-carbide 56 and diamond powder 54. According to one aspect of the present disclosure, the diamond powder 54 includes diamond particles ranging in size from 1 µm to 5 µm, and the weight of the diamond powder in relation to the total weight of the solids component of the adhesive layer 46 is in the range of from about 1% to about 10%.

Thus, if desired, two or more bodies 64, 66 made of reaction-bonded silicon carbide may be adhered to each other by a bond layer 60, 76, 78 made of a low-silicon content reaction-bonded silicon-carbide material. The bodies 64, 66 may be joined together by hardening and then carbonizing an epoxy compound which includes diamond particles 54 and silicon-carbide particles 56, and then silicon-infiltrating the carbonized material. The resulting product 62, 72, 74 may be characterized as a reaction-bonded silicon-carbide body with a low silicon-content bond layer 60, 76, 78.

As used herein, the word "about" qualifies the associated value by plus or minus 10%. For example, in the present disclosure, "about" 100 units means greater than or equal to 90 units and less than or equal to 110 units

The foregoing description of preferred and other embodiments is not intended to limit or restrict the scope or applicability of the inventive concepts conceived of by the Applicants. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter

## Claims

1. An epoxy-based glue, comprising:
- a liquid component including an epoxy material; and
- a solids component including diamond powder and silicon-carbide particles.

2. The glue of claim 1, wherein the epoxy material includes epoxy resin and epoxy hardener.

3. The glue of claim 1, wherein the diamond powder is not less than about 1% by weight of the solids component and not more than about 10% by weight of the solids component.

4. The glue of claim 1, wherein the diamond powder consists of diamond particles, and wherein sizes of the diamond particles are in a range of from about 1 µm to about 5 µm.

5. The glue of claim 1, wherein the solids component contains more of the silicon-carbide particles than the diamond powder.

6. A method of assembling a product from at least two preforms, the method comprising:
- locating an adhesive layer between opposed surfaces of the preforms, the adhesive layer including an epoxy material and diamond powder;
- subsequently, carbonizing the adhesive layer to produce a carbonized layer;
- subsequently, infiltrating molten silicon into the preforms and the carbonized layer to convert the preforms into corresponding parts including reaction-bonded silicon-carbide, and to convert the carbonized layer into a joint region bonding the parts together and including reaction-bonded silicon-carbide.

7. The method of claim 6, wherein the adhesive layer includes silicon-carbide particles.

8. The method of claim 6, wherein the carbonizing of the adhesive layer includes raising the temperature of the adhesive layer to a temperature in the range of from about 560 °C to about 840 °C.

9. The method of claim 6, wherein the carbonizing of the adhesive layer includes using an inert gas to displace an atmosphere surrounding the adhesive layer.

10. The method of claim 6, wherein the infiltration occurs in a vacuum or inert atmosphere.

11. The method of claim 6, wherein the molten silicon expands as it solidifies in the parts and the joint region.

12. An assembled product made by a method including:
- locating an adhesive layer between opposed surfaces of preforms, the adhesive layer including an epoxy material and diamond powder;
- subsequently, carbonizing the adhesive layer to produce a carbonized layer; and
- subsequently, infiltrating molten silicon into the preforms and the carbonized layer to convert the preforms into corresponding parts including reaction-bonded silicon-carbide, and to convert the carbonized layer into a joint region bonding the parts together and including reaction-bonded silicon-carbide.

13. The product of claim 12, wherein the epoxy material includes epoxy resin and epoxy hardener.

14. The product of claim 12, wherein the adhesive layer has a solids component, and wherein the diamond powder is not less than about 1% by weight of the solids component and not more than about 10% by weight of the solids component.

15. The product of claim 12, wherein the diamond powder consists of diamond particles, and wherein sizes of the diamond particles are in a range of from about 1 µm to about 5 µm.

16. The product of claim 12, wherein the solids component contains more of the silicon-carbide particles than the diamond powder.
